# FASCICULE DE BREVET EUROPEEN

(11) **EP 2 009 982 B1**
(45) Date de publication et mention de la délivrance du brevet: **09.01.2019**
(21) Numéro de dépôt: 07728277.0
(22) Date de dépôt: 19.04.2007
(51) Int. Cl.: A01B 33/02, B60L 11/18, H02J 7/00

(54) **MOTOBINEUSE ELECTRIQUE**
ELEKTRISCHES MOTOR-BEARBEITUNGSGERÄT
ELECTRIC POWER HOE

(30) Priorité: 20.04.2006 FR 0603513
(43) Date de publication de la demande: 07.01.2009
(73) Titulaire: PUBERT HENRI SAS, 85110 Chantonnay (FR)
(72) Inventeur: GERBAUD, Nicolas, 85110 Monsireigne (FR); GRARE, Didier, 85430 Les Clouzeaux (FR); VION, Peter, 85700 Pouzauges (FR); MENIERE, Frédéric, 69007 Lyon (FR); FANJAS, Guillaume, 38112 Meaudre (FR); ALBIN, Franck, 26290 Donzere (FR)
(74) Mandataire: Vidon Brevets & Stratégie
(86) Numéro de dépôt international: PCT/EP2007/053815
(87) Numéro de publication internationale: WO 2007/122169

(56) Documents cités:
- EP-A- 0 817 352
- EP-A- 1 452 084
- DE-A1- 19 725 237
- DE-A1- 19 725 238
- US-B2- 7 584 804

## Description

### 1. Domaine de l'invention

Le domaine de l'invention est celui de la motoculture. Plus précisément, l'invention concerne les équipements de motoculture, ou de travail du sol, à conducteur marchant, comme les motobineuses. Elle concerne en particulier de tels équipements fonctionnant à l'électricité et alimentés par des batteries.

### 2. Solutions de l'art antérieur

On connaît depuis longtemps des équipements de motoculture fonctionnant à l'électricité. Il existe pour cela deux solutions. La première consiste à relier de façon permanente l'équipement à une prise électrique pour assurer son alimentation. La seconde est d'équiper l'équipement d'accumulateurs d'électricité, ou de batteries, pour assurer son autonomie électrique. La présente invention concerne particulièrement les équipements de motoculture fonctionnant selon cette deuxième solution.

Les équipements de motoculture à batterie présentent différents inconvénients, et sont par conséquent moins fréquemment utilisés que les équipements à moteur thermique. Un premier inconvénient est leur puissance limitée, qui limite leurs possibilité d'utilisation pour les travaux exigeant de la puissance, comme le travail de la terre. Parmi ces inconvénients, on peut également citer notamment les problèmes d'autonomie.

Il est à noter que les motobineuses, ou bineuses motorisées, sont des outils de travail du sol, qui exigent par conséquent une puissance relativement importante. D'autre part, et contrairement à d'autres équipements de motoculture, les motobineuses ne comportent généralement pas de roues indépendantes des outils. Leur déplacement se fait en roulant sur la pointe des outils, qui tournent alors à vitesse réduite. Il est évident que ce déplacement exige une puissance très inférieure à celle nécessaire au travail du sol.

La ou les batteries alimentant le moteur de l'équipement de motoculture, et plus particulièrement celles des motobineuses, qui doivent fournir une puissance importante pour travailler le sol, doivent en effet fournir une puissance importante pendant une durée assez longue pour que l'utilisateur puisse travailler efficacement. Les performances des batteries adaptées à une telle utilisation diminuent avec le temps. Ainsi, une motobineuse muni d'une batterie adaptée peut offrir à l'utilisateur de bonnes conditions d'utilisation en termes notamment de puissance fournie et de durée d'autonomie, quand la ou les batteries sont récentes. L'usure des batteries entraîne une diminution de leurs performances, et par conséquent une dégradation des conditions d'utilisation.

La mauvaise utilisation des batteries accélère de façon sensible la diminution de leurs performances. Dans certains modèles de batterie utilisés, comme par exemple les batteries au plomb, les batteries au nickel-métal-hydrure ou les batteries au lithium, il est ainsi préjudiciable de décharger la batterie complètement, ou même de faire baisser la tension à ses bornes en dessous d'un certain niveau. Pour protéger ces batteries, l'utilisateur doit donc surveiller un indicateur, généralement visuel, qui lui indique le niveau de charge des batteries. Quand le niveau de charge descend en dessous d'un niveau critique, l'utilisateur doit cesser d'utiliser l'équipement et recharger les batteries.

Il arrive cependant fréquemment que l'utilisateur néglige de surveiller le niveau de charge des batteries de son équipement et qu'il continue à utiliser son équipement jusqu'à ce que les batteries ne puissent plus fournir l'énergie suffisante au fonctionnement du moteur. Un tel comportement est gravement préjudiciable pour les performances et la durée de vie des batteries.

Il arrive également que l'utilisateur se rende compte du niveau de charge insuffisant de ses batteries alors qu'il est éloigné de la source de courant qui peut lui permettre de recharger les batteries de son équipement. Il est alors incité à continuer à utiliser l'équipement, et donc à continuer de travailler le sol, pendant son trajet jusqu'à la source de courant. Ce comportement est également préjudiciable pour les performances des batteries.

Ces difficultés liées à l'usure prématurée des batteries rendent peu intéressante l'utilisation de motobineuses fonctionnant à l'électricité sur batterie. Les contraintes imposées aux motobineuses font qu'elles sont moins bien adaptées à une utilisation sur batterie que d'autres équipements de motoculture.

Le document US-A-7584804 décrit une motobineuse qui fonctionne selon deux modes de fonctionnement, un mode de fonctionnement normal et un mode de fonctionnement dégradé. Toutefois, cette motobineuse ne propose pas le changement automatique du mode de fonctionnement normal en mode de fonctionnement dégradé lorsque le niveau de charge des batteries passe en dessous d'un seuil prédéterminé.

### 3. Objectifs de l'invention

L'invention a notamment pour objectif de pallier ces inconvénients de l'art antérieur.

Un objectif de l'invention est ainsi de permettre l'utilisation efficace de motobineuse électrique alimentée par des batteries.

Plus précisément, un objectif de l'invention est de fournir une motobineuse électrique alimentée par des batteries, dans lequel l'usure des batteries est limitée.

De façon particulière, l'invention a pour objectif que les batteries d'une telle motobineuse soient utilisées exclusivement ou quasi-exclusivement dans des conditions d'utilisation garantissant une diminution minimale de leurs performances.

L'invention a également pour objectif de fournir une telle motobineuse pour laquelle la gestion de la charge des batteries cause le moins possible d'inconvénient à l'utilisateur.

### 4. Exposé de l'invention

Ces objectifs, ainsi que d'autres qui apparaîtront par la suite, sont atteints à l'aide d'une motobineuse selon la revendication 1.

Selon l'invention, une telle motobineuse comprend également une fonctionnalité permettant de fournir une puissance supplémentaire au moteur pendant une période de temps limitée, qui n'est accessible que dans le mode de fonctionnement normal.

Une telle fonctionnalité permet à l'utilisateur, en mode normal, d'obtenir plus de puissance pour utiliser sa motobineuse dans une terre plus dure ou contenant des racines.

Dans le mode de fonctionnement dégradé, la puissance électrique fournie au moteur est limitée à un niveau inférieur à la puissance électrique fournie dans le mode de fonctionnement normal.

L'utilisateur ne peut ainsi pas utiliser sa motobineuse efficacement pour travailler, quand il est en mode dégradé. Il n'est ainsi pas tenté de l'utiliser pour travailler le sol jusqu'à l'épuisement de la batterie. De plus, les batteries se déchargent moins rapidement dans ce mode.

Dans le mode de fonctionnement dégradé, la puissance électrique fournie au moteur permet uniquement le déplacement de la motobineuse.

L'utilisateur n'est ainsi pas obligé, quand il doit procéder à la recharge des batteries de sa motobineuse, de porter celui-ci jusqu'au chargeur ou à l'alimentation électrique. Il peut en effet la déplacer en la faisant rouler sur ses outils, ce qui nécessite une puissance bien inférieure au travail du sol.

Préférentiellement, le moteur peut fonctionner selon au moins deux vitesses de fonctionnement, et, dans le mode dégradé, au moins une des vitesses n'est pas accessible.

De manière avantageuse, une motobineuse selon l'invention comprend un indicateur visuel permettant d'indiquer à l'utilisateur le mode de fonctionnement.

L'utilisateur peut ainsi savoir très facilement le mode de fonctionnement de sa motobineuse.

Selon une variante de l'invention, une telle motobineuse met en oeuvre un troisième mode de fonctionnement dans lequel le moteur est arrêté avant que la ou les batteries soient complètement déchargées.

La ou les batteries sont ainsi protégées des dommages dus à une décharge excessive, même dans le cas où l'utilisateur utiliserait la motobineuse en mode dégradé sans s'arrêter.

Selon un mode de réalisation préférentiel de l'invention, une telle motobineuse comprend une carte électronique assurant les fonctions de mesure de la ou des informations représentatives de la charge de la ou des batteries, de délivrance de la puissance électrique au moteur, et d'activation ou de désactivation des fonctionnalités de la motobineuse en fonction du mode de fonctionnement.

Une telle carte électronique permet de commander facilement le fonctionnement de la motobineuse dans les différents modes.

Préférentiellement, la carte électronique mémorise au moins une des informations appartenant au groupe comportant le nombre de passages dans au moins un des modes de fonctionnement, et la durée de fonctionnement dans au moins un des modes de fonctionnement.

La carte électronique enregistre ainsi les informations permettant de comprendre une éventuelle détérioration prématurée des batteries.

Avantageusement, la carte électronique comprend des moyens de mesure de paramètres liés au moteur permettant de détecter un blocage du moteur, et peut couper l'alimentation électrique du moteur et/ou de la motobineuse en cas de blocage dudit moteur.

La carte électronique peut ainsi jouer le rôle d'un limiteur de couple et protéger le mécanisme de transmission et le moteur de détérioration en cas de blocage.

De manière avantageuse, la carte électronique peut communiquer avec un appareil de maintenance de la motobineuse.

La personne chargée de la maintenance de la motobineuse peut ainsi disposer de toutes les informations mémorisées par la carte électronique.

Préférentiellement, la carte électronique comprend une fonction d'inversion de la marche du moteur.

Il n'est ainsi pas nécessaire d'intégrer à la motobineuse de mécanisme d'inversion de la marche.

Selon un mode de réalisation préféré, la ou les batteries sont amovibles de la motobineuse.

Le portage de la motobineuse par l'utilisateur est ainsi facilité.

Selon un autre mode de réalisation préférentiel, la mise sous tension de la motobineuse est commandée par une action simultanée de l'utilisateur sur une commande de marche/arrêt et une commande de variation de vitesse, et le démarrage du moteur, quand la motobineuse est sous tension, est commandé par une nouvelle action de l'utilisateur sur la commande de variation de vitesse.

Les risques d'accident dus à un démarrage involontaire de la motobineuse allumé sont ainsi limités.

Avantageusement, l'absence d'action de l'utilisateur sur une commande de la motobineuse entraîne la mise hors tension de la motobineuse après un temps prédéterminé.

Les risques d'accident dans le cas ou l'utilisateur abandonne la motobineuse allumée sont ainsi limités.

Selon un mode de réalisation avantageux, l'axe du moteur électrique est implanté sur la motobineuse suivant un angle d'inclinaison par rapport à la verticale, vers l'avant ou vers l'arrière de la motobineuse.

Cette implantation permet une meilleure répartition des masses de la motobineuse et une meilleure compacité de celui-ci.

Selon un mode de réalisation particulièrement avantageux, qui peut d'ailleurs être mis en oeuvre indépendamment des autres aspects de l'invention, la motobineuse peut comprendre au moins une roue de transport amovible solidarisable à au moins un des outils de travail du sol de façon à faciliter son déplacement.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente une motobineuse suivant un mode de réalisation de l'invention ;
- la figure 2 est un graphique représentant les modes de fonctionnement de la motobineuse de la figure 1 en fonction de la tension aux bornes de ses batteries ;
- la figure 3 représente de façon schématique les interactions entre les différents éléments de la motobineuse de la figure 1 ;
- la figure 4 représente une motobineuse suivant un autre mode de réalisation de l'invention.

### 6. Description détaillée de l'invention

### 6.1 Rappel du principe de l'invention

Le principe général de l'invention repose sur une gestion des fonctionnalités de la motobineuse en fonction du niveau de charge de la batterie. La motobineuse peut ainsi fonctionner selon plusieurs modes, dont un mode de travail (appelé aussi « mode normal ») dans lequel toutes les fonctionnalités sont accessibles et un mode dégradé (appelé aussi « mode déplacement ») dans lequel certaines fonctionnalités ne sont pas accessibles, ou ne sont accessibles que partiellement.

### 6.2 Motobineuse selon un mode de réalisation de l'invention

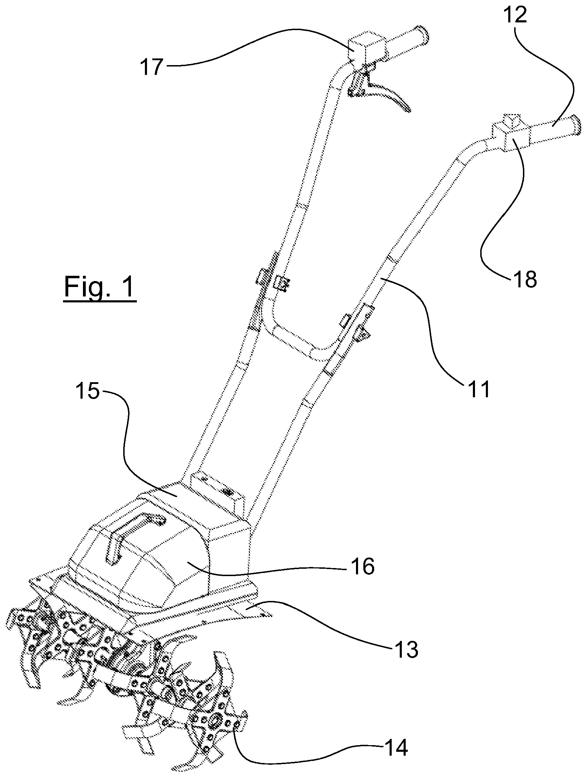

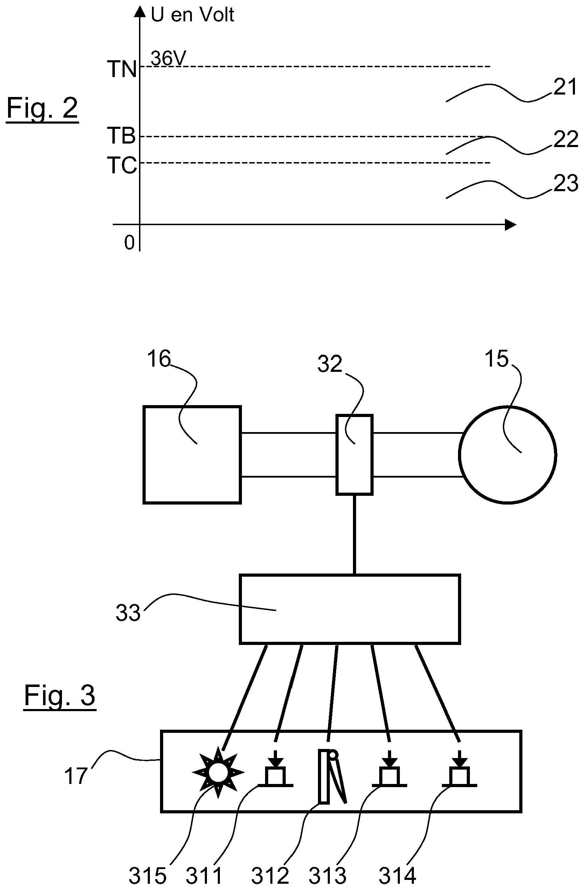

La figure 1 représente une motobineuse selon un mode de réalisation de l'invention. La figure 3 représente de façon schématique certains des éléments constituant cette motobineuse, et les interactions entre ces différents éléments.

Cette motobineuse comporte, de façon classique, un guidon 11 à l'extrémité duquel se trouvent des poignées 12, un carter 13, ou corps de la machine, et des outils de travail du sol 14. Cette motobineuse est électrique, et comporte donc un moteur électrique 15 alimenté par des batteries 16.

Un boîtier de commande 17, situé à proximité de l'une des poignées 12, permet à l'utilisateur de commander la motobineuse, et notamment la puissance électrique fournie par les batteries 16 au moteur 15. Ce boîtier de commande 17, qui est représenté de façon schématique sur la figure 3, peut notamment comprendre un bouton-poussoir de marche/arrêt 311, qui commande la marche générale de la motobineuse. Selon un autre mode de réalisation, ce bouton poussoir de marche/arrêt peut également être implanté sur le corps de la machine.

Le boîtier de commande 17 comporte également d'autres commandes, qui contrôlent les différentes fonctionnalités de la motobineuse. Plusieurs de ces fonctionnalités sont liées au variateur 32 qui détermine l'énergie électrique fournie au moteur 15 de la motobineuse par les batteries 16.

Ainsi, une commande de variation de vitesse 312 permet de modifier la vitesse de rotation du moteur 15, et donc des outils 14. De la même façon, suivant les modèles, un bouton de vitesse supérieure 313 peut permettre de fournir au moteur 15 une puissance supplémentaire pendant un temps limité, par exemple pour un passage dans une terre plus dure ou comportant des racines. Le bouton 313 peut également, suivant le modèle, être disposé sur un autre boîtier de commande 18 situé à proximité de l'autre poignée. Pour éviter l'utilisation continue de la motobineuse avec cette fonctionnalité, le bouton de vitesse supérieure 313 doit être maintenu appuyé par l'utilisateur pour que la fonction soit active.

Un bouton de marche arrière 314 permet d'inverser le sens de rotation du moteur 15, et donc des outils 14. Le bouton de marche arrière 314 doit être maintenu appuyé par l'utilisateur pour que la fonction soit active.

La motobineuse de la figure 1 ne comporte pas de roues pour se déplacer. Son déplacement, quand les outils ne travaillent pas le sol, se fait donc sur la pointe des outils 14. Bien entendu, ce déplacement nécessite une puissance très inférieure à la puissance de travail de la terre par ces mêmes outils 14.

### 6.3 Carte électronique et différents modes de fonctionnement

La gestion des commandes et des fonctionnalités de la motobineuse, ainsi que la commande du variateur 32 qui délivre la puissance électrique au moteur 15, est faite dans cette motobineuse par une carte électronique spécifique 33.

Comme le représente schématiquement la figure 3, les différentes commandes du boîtier de commande 17 et/ou 18 sont reliées à la carte électronique 33. La carte électronique génère alors, en fonction notamment de ces commandes, une consigne envoyée au variateur 32, qui détermine la puissance électrique envoyée au moteur 15 par les batteries 16.

Cette carte électronique 33 effectue également un contrôle de la tension aux bornes des batteries 16. Cette tension est représentative du niveau de charge des batteries. En fonction de cette tension, la carte électronique 33 fait fonctionner la motobineuse selon des modes de fonctionnement différents. Le mode de fonctionnement de la motobineuse est indiqué à l'utilisateur par un indicateur visuel lumineux 315 constitué par une Diode Electro-Luminescente (DEL) située sur le boîtier de contrôle 17 et/ou 18 ou sur le corps de la machine.

Les différents modes de fonctionnement sont représentés sur le graphique de la figure 2, en fonction de la tension U aux bornes des batteries 16. Quand la tension U aux bornes des batteries 16 est comprise entre sa tension nominale TN, ici de 36V, et une tension basse TB, la motobineuse fonctionne en mode normal 21, ou mode de travail. Dans ce mode de fonctionnement, toutes les fonctionnalités de la motobineuse sont accessibles à l'utilisateur, qui peut faire fonctionner le moteur à pleine puissance pour travailler la terre.

Quand la tension U aux bornes des batteries 16 est comprise entre la tension basse TB et une tension critique TC, la motobineuse fonctionne en mode dégradé 22, ou mode déplacement. Dans ce mode de fonctionnement, l'utilisateur n'a plus accès à l'ensemble des fonctionnalités de la motobineuse. Il ne peut ainsi pas utiliser la fonctionnalité de vitesse supérieure, commandée par le bouton 313.

Au contraire, dans ce mode, la puissance fournie au moteur est limitée, et les outils tournent ainsi à une vitesse limitée qui ne permet pas le travail de la terre. Cette limitation de la puissance est provoquée par une limitation de la tension délivrée au moteur par le variateur, sous l'effet d'une consigne de la carte électronique. Ce mode permet donc uniquement à l'utilisateur de déplacer la motobineuse afin qu'il puisse se rendre facilement jusqu'à une source d'alimentation électrique pour recharger les batteries.

Quand la tension U aux bornes des batteries est égale ou inférieure à la tension critique TC, le motoculteur passe en mode défaut 23, qui cause, après une courte temporisation, un arrêt du moteur pour préserver la batterie. Cet arrêt intervient donc avant que la batterie ne soit complètement déchargée.

### 6.4 Autres caractéristiques et avantages

L'utilisation d'une carte électronique pour commander les fonctionnalités de la motobineuse permet de faciliter la maintenance de celle-ci. En effet, la carte électronique 33 peut être connectée à un ordinateur dédié à la maintenance, par exemple par le biais d'un câble de connexion spécifique. Elle peut ainsi fournir à cet ordinateur des informations telles que le numéro de série de la motobineuse et des différents éléments qu'elle comporte (batterie, moteur, variateur...), la tension U aux bornes de la batterie, et le temps d'utilisation de la motobineuse et de chacun de ses composants (batterie, variateur, moteur...), qui aura été mémorisé par la carte électronique.

La carte électronique mémorise également le temps d'utilisation de la motobineuse en mode dégradé 22, et le nombre de passages en mode défaut, et peut restituer ces informations à l'ordinateur de maintenance. Ces informations peuvent par exemple expliquer une usure prématurée de la batterie, et faciliter la maintenance de la motobineuse.

Les batteries de la motobineuse selon l'invention sont amovibles, et ne peuvent être rechargées que quand elles sont retirées de la motobineuse. Cette solution présente plusieurs avantages. Ainsi, pour porter la motobineuse, l'utilisateur peut séparer les batteries et les porter dans une main alors qu'il porte la motobineuse dans l'autre. Il répartit ainsi les charges et peut porter la motobineuse plus facilement. D'autre part, cette solution permet de fournir à l'utilisateur un deuxième jeu de batterie, ce qui lui permet de continuer à utiliser la motobineuse quand le premier jeu de batteries est déchargé, pendant que celui-ci se recharge. Cette solution apporte donc un confort supplémentaire à l'utilisateur de la motobineuse.

L'utilisation d'un moteur électrique pour ce motoculteur permet de modifier l'implantation du moteur. En effet, contrairement aux moteurs thermiques, il n'est pas nécessaire d'implanter verticalement un moteur électrique. Pour optimiser la compacité et la répartition des masses de l'équipement, il est donc avantageux d'implanter l'axe du moteur suivant un angle d'inclinaison vers l'avant ou vers l'arrière de l'équipement.

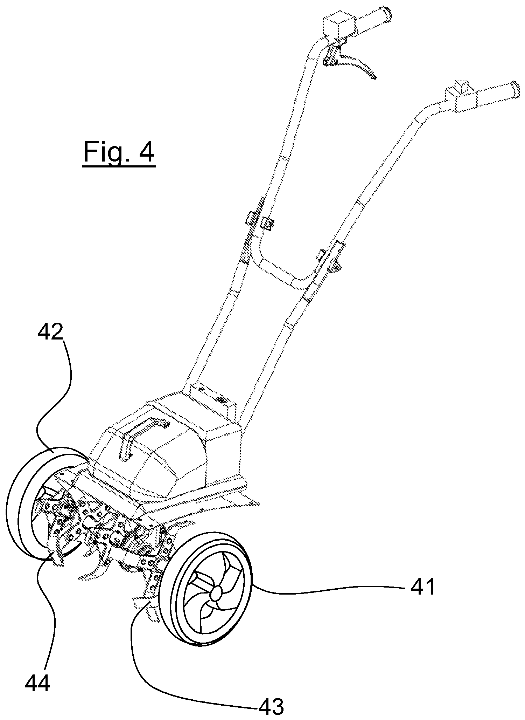

La figure 4 représente une motobineuse selon un mode de réalisation particulier de l'invention, mettant en oeuvre des roues de transport amovibles 41 et 42. Ces roues de transport sont d'un diamètre légèrement supérieur aux outils de travail du sol, et peuvent se solidariser, par exemple par clippage, sur les outils respectivement 43 et 44, qui sont situés sur les côtés de la motobineuse. L'axe de rotation des outils devient donc l'axe des roues 41 et 42.

Ce mode de réalisation particulier, qui peut être mis en oeuvre sur tout type de motoculteurs, y compris les motoculteurs à moteur thermique, permet de déplacer le motoculteur plus facilement que sur la pointe des outils, comme cela se faisait dans l'art antérieur. Il ne nécessite cependant pas de mécanisme de transmission séparé de celui apportant la puissance aux outils. Bien évidemment, dans le mode dégradé pour ce mode de réalisation, le moteur actionne à la fois les outils et les roues qui y sont liés.

La motobineuse selon l'invention peut également comprendre des dispositifs de sécurité, permettant notamment d'éviter la mise en route accidentelle de l'équipement par un enfant. Ces dispositifs de sécurité peuvent bien entendu être mis en oeuvre indépendamment des modes de fonctionnement de travail ou dégradé, et indépendamment les uns des autres.

Ainsi, lorsque que l'on actionne le bouton-poussoir de marche/arrêt 311, la carte électronique 33 vérifie si la commande de variation de vitesse 312 est actionnée. Si la commande de variation de vitesse n'est pas actionnée, la motobineuse ne démarre pas. Si la commande de variation de vitesse 312 est actionnée, la motobineuse est mise en mode de fonctionnement, mais la carte électronique 33 attend que la commande de variation de vitesse 312 soit relâchée et actionnée de nouveau avant de démarrer effectivement le moteur.

Pour plus de sécurité, notamment envers les enfants, dans le cas où un adulte laisse sa motobineuse sans surveillance, la carte électronique 33 met automatiquement la motobineuse à l'arrêt quand la commande de variation de vitesse 312 n'est pas actionnée pendant un temps prédéterminé, par exemple égal à une minute. Pour travailler à nouveau, il convient de recommencer la séquence de démarrage.

Enfin, pour la protection de la motobineuse, la carte électronique 33 est équipée de moyens de mesure du courant, de la tension et de la température qui lui permet de détecter un blocage anormal de la transmission mécanique de la motobineuse apparaît, comme par exemple le blocage des outils dans de très grosses racines ou pierres. La carte électronique 33 peut dans ce cas couper l'alimentation électrique du moteur ou de la motobineuse, pour protéger le mécanisme de transmission et le moteur.

## Revendications

1. Motobineuse comprenant un moteur électrique (15) actionnant des outils de travail du sol (14, 43, 44) et au moins une batterie (16) destinée à alimenter ledit moteur (15), en ce qu'elle comprend une carte électronique (33) assurant les fonctions de mesure d'au moins une information représentative d'un niveau de charge de la ou desdites batteries (16), de délivrance d'une puissance électrique au moteur, et de commande du fonctionnement de la motobineuse selon au moins deux modes de fonctionnement sélectionnés en fonction de ladite au moins une information représentative du niveau de charge de la ou desdites batteries (16), lesdits au moins deux modes de fonctionnement consistant en :
- un mode de fonctionnement normal (21), présentant un ensemble de fonctionnalités de ladite motobineuse, ayant une fonctionnalité permettant de fournir une puissance supplémentaire pour travailler le sol pendant une période de temps limitée, tant qu'un bouton de contrôle (313) correspondant est maintenu appuyé par un utilisateur, et
- un mode de fonctionnement dégradé (22), dans lequel la puissance électrique fournie audit moteur (15) est limitée à un niveau inférieur à ladite puissance électrique fournie dans le mode de fonctionnement normal (21), lorsque ladite au moins une information représentative du niveau de charge de la ou desdites batteries (16) indique que le niveau de charge de la ou desdites batterie (16) passe en dessous d'un seuil prédéterminé et permettant uniquement le déplacement de ladite motobineuse en faisant rouler lesdits outils de travail du sol (14, 43, 44).

2. Motobineuse selon la revendication 1, **caractérisée en ce que** qu'elle comprend un indicateur visuel (315) permettant d'indiquer à l'utilisateur le mode de fonctionnement.

3. Motobineuse selon l'une quelconque des revendications 1 et 2, **caractérisée en ce qu'**elle met en oeuvre un troisième mode de fonctionnement (23) dans lequel ledit moteur est arrêté avant que la ou lesdites batteries (16) soient complètement déchargées.

4. Motobineuse selon l'une quelconque des revendications 1 à 3, **caractérisée en ce que** ladite carte électronique (33) mémorise au moins une des informations appartenant au groupe comportant :
- le nombre de passages dans au moins un desdits modes de fonctionnement ; et
- la durée de fonctionnement dans au moins un desdits modes de fonctionnement.

5. Motobineuse selon l'une quelconque des revendications 1 à 4, **caractérisée en ce que** ladite carte électronique (33) comprend des moyens de mesure de paramètres liés audit moteur (15) permettant de détecter un blocage dudit moteur (15).

6. Motobineuse selon la revendication 5, **caractérisée en ce que** ladite carte électronique (33) peut couper l'alimentation électrique dudit moteur (15) et/ou dudit équipement en cas de blocage dudit moteur (15).

7. Motobineuse selon l'une quelconque des revendications 1 à 6, **caractérisée en ce que** ladite carte électronique (33) peut communiquer avec un appareil de maintenance.

8. Motobineuse selon l'une quelconque des revendications 1 à 7, **caractérisée en ce que** ladite carte électronique (33) comprend une fonction d'inversion de la marche dudit moteur (15).

9. Motobineuse selon l'une quelconque des revendications 1 à 8, **caractérisée en ce que** la ou lesdites batteries (16) sont amovibles.

10. Motobineuse selon l'une quelconque des revendications 1 à 9, **caractérisée en ce que** sa mise sous tension est commandée par une action simultanée de l'utilisateur sur une commande de marche/arrêt (311) et une commande de variation de vitesse (312), et **en ce que** le démarrage dudit moteur (15), quand ladite motobineuse est sous tension, est commandé par une nouvelle action de l'utilisateur sur ladite commande de variation de vitesse (312).

11. Motobineuse selon l'une quelconque des revendications 1 à 10, **caractérisée en ce que** l'absence d'action de l'utilisateur sur une commande de ladite motobineuse entraîne la mise hors tension de ladite motobineuse après un temps prédéterminé.

12. Motobineuse selon l'une quelconque des revendications 1 à 11, **caractérisée en ce que** l'axe dudit moteur électrique (15) est implanté sur ledit équipement suivant un angle d'inclinaison par rapport à la verticale, vers l'avant ou l'arrière de ladite motobineuse.

13. Motobineuse selon l'une quelconque des revendications 1 à 12, **caractérisée en ce qu'**elle comprend au moins une roue de transport (41, 42) amovible solidarisable à au moins un desdits outils de travail du sol (14, 43, 44) de façon à faciliter le déplacement de ladite motobineuse.

## Patentansprüche

1. Motorhacke umfassend einen Elektromotor (15) zur Betätigung von Bodenbearbeitungswerkzeugen (14, 43, 44) und wenigstens eine zum Versorgen des Motors (15) ausgebildete Batterie (16), **dadurch gekennzeichnet, dass** sie eine Leiterplatte (33) umfasst zum Gewährleisten der Funktionen zum Messen wenigstens einer Information repräsentativ für einen Ladezustand der Batterie (n) (16), der Lieferung einer elektrischen Leistung an den Motor und der Steuerung des Betriebs der Motorhacke gemäß wenigstens zwei Betriebsarten, die entsprechend der wenigstens einen Information repräsentativ für den Ladezustand der Batterie(n) (16) gewählt werden, wobei die wenigstens zwei Betriebsarten bestehen aus:
- einer normalen Betriebsart (21), aufweisend eine Gesamtheit von Funktionen der Motorhacke, mit einer Funktion zum Ermöglichen des Lieferns einer zusätzlichen Leistung zum Bearbeiten des Bodens während eines begrenzten Zeitraums, solange eine entsprechende Steuertaste (313) von einem Benutzer gedrückt gehalten wird, und
- einer Notbetriebsart (22), in der die an den Motor (15) gelieferte elektrische Leistung auf ein Niveau unter der in der normalen Betriebsart (21) gelieferten elektrischen Leistung beschränkt wird, wenn die wenigstens eine Information repräsentativ für den Ladezustand der Batterie(n) (16) angibt, dass der Ladezustand der Batterie(n) (16) unter einer vorgegebenen Schwelle abfällt und nur das Bewegen der Motorhacke durch Laufenlassen der Bodenbearbeitungswerkzeuge (14, 43, 44) ermöglicht.

2. Motorhacke nach Anspruch 1, **dadurch gekennzeichnet, dass** sie eine optische Anzeige (315) umfasst, die es ermöglicht, dem Benutzer die Betriebsart anzuzeigen.

3. Motorhacke nach einem der Ansprüche 1 und 2, **dadurch gekennzeichnet, dass** sie eine dritte Betriebsart (23) aufweist, in welcher der Motor gestoppt wird, bevor die Batterie(n) (16) vollständig entladen ist/sind.

4. Motorhacke nach einem der Ansprüche 1 bis 3, **dadurch gekennzeichnet, dass** die Leiterplatte (33) wenigstens eine der Informationen speichert, die zur Gruppe gehört umfassend:
- Zahl der Wechsel zu wenigstens einen der Betriebsarten; und
- Dauer des Betriebs in wenigstens einer der Betriebsarten.

5. Motorhacke nach einem der Ansprüche 1 bis 4, **dadurch gekennzeichnet, dass** die Leiterplatte (33) Mittel zum Messen von Parametern in Verbindung mit dem Motor (15) umfasst, die das Erkennen einer Blockade des Motors (15) ermöglichen.

6. Motorhacke nach Anspruch 5, **dadurch gekennzeichnet, dass** die Leiterplatte (33) die Stromversorgung des Motors (15) und/oder der Ausrüstung bei einer Blockade des Motors (15) unterbrechen kann.

7. Motorhacke nach einem der Ansprüche 1 bis 6, **dadurch gekennzeichnet, dass** die Leiterplatte (33) mit einem Wartungsgerät kommunizieren kann.

8. Motorhacke nach einem der Ansprüche 1 bis 7, **dadurch gekennzeichnet, dass** die Leiterplatte (33) eine Funktion zum Umkehren der Laufrichtung des Motors (15) umfasst.

9. Motorhacke nach einem der Ansprüche 1 bis 8, **dadurch gekennzeichnet, dass** die Batterie(n) (16) entnehmbar sind.

10. Motorhacke nach einem der Ansprüche 1 bis 9, **dadurch gekennzeichnet, dass** das Einschalten durch eine gleichzeitige Betätigung eines Ein/Aus-Bedienelements (311) und eines Bedienelements zur Geschwindigkeitsregelung (312) durch den Benutzer gesteuert wird und dass das Anlaufen des Motors (15), wenn die Motorhacke eingeschaltet ist, durch eine erneute Betätigung des Bedienelements zur Geschwindigkeitsregelung (312) durch den Benutzer gesteuert wird.

11. Motorhacke nach einem der Ansprüche 1 bis 10, **dadurch gekennzeichnet, dass** das Fehlen der Betätigung eines Bedienelements der Motorhacke durch den Benutzer zum Ausschalten der Motorhacke nach einer vorgegebenen Zeit führt.

12. Motorhacke nach einem der Ansprüche 1 bis 11, **dadurch gekennzeichnet, dass** die Achse des Elektromotors (15) auf der Ausrüstung in einem Neigungswinkel zur Vertikale nach vorne oder hinten der Motorhacke eingesetzt ist.

13. Motorhacke nach einem der Ansprüche 1 bis 12, **dadurch gekennzeichnet, dass** sie wenigstens ein mit wenigstens einem der Bodenbearbeitungswerkzeuge (14, 43, 44) verbindbares abnehmbares Transportrad (41, 42) umfasst, um das Bewegen der Motorhacke zu erleichtern.

## Claims

1. Power hoe comprising an electric motor (15) actuating tillage implements (14, 43, 44) and at least one battery (16) intended to supply said motor (15), in that it comprises an electronic card (33) providing the functions of measuring at least one information item showing a level of charge of said battery or batteries (16), output of electric power to the motor, and control of the power hoe operation in accordance with at least two operation modes selected depending on said at least one information item showing the level of charge of said battery or batteries (16), said at least two operation modes consisting of:
- a normal operation mode (21), having a set of said power hoe's functions, having a function whereby supplementary power can be provided for tilling for a limited period, for as long as a corresponding control button (313) is continuously pressed by a user, and
- a downgraded operation mode (22), wherein the electrical power supplied to said motor (15) is limited to a level lower than said electrical power supplied in the normal operation mode (21), when said at least one information item showing the level of charge of said battery or batteries (16) indicates that the level of charge of said battery or batteries (16) goes below a predetermined threshold and making possible only the movement of said power hoe by rotating said tillage implements (14, 43, 44).

2. Power hoe according to Claim 1, **characterised in that** it comprises a visual indicator (315) for indicating the operation mode to the user.

3. Power hoe according to either of Claims 1 or 2, **characterised in that** it uses a third operation mode (23) wherein said motor is stopped before said battery or batteries (16) are completely discharged.

4. Power hoe according to any of Claims 1 to 3, **characterised in that** said electronic card (33) stores at least one of the information items belonging to the group comprising:
- the number of transitions to at least one of said operation modes; and
- the duration of operation in at least one of said operation modes.

5. Power hoe according to any of Claims 1 to 4, **characterised in that** said electronic card (33) comprises means of measuring parameters linked to said motor (15) whereby blockage of said motor (15) can be detected.

6. Power hoe according to Claim 5, **characterised in that** said electronic card (33) can cut off the electrical supply of said motor (15) and/or of said equipment if said motor (15) is blocked.

7. Power hoe according to any of Claims 1 to 6, **characterised in that** said electronic card (33) can communicate with a maintenance apparatus.

8. Power hoe according to any of Claims 1 to 7, **characterised in that** said electronic card (33) comprises a function for reversing the operating direction of said motor (15).

9. Power hoe according to any of Claims 1 to 8, **characterised in that** said battery or batteries (16) are detachable.

10. Power hoe according to any of Claims 1 to 9, **characterised in that** said power hoe is switched on by the user's simultaneous use of an on/off control (311) and a speed change control (312), and **in that** said motor (15), when said power hoe is switched on, is started by the user's further use of said speed change control (312).

11. Power hoe according to any of Claims 1 to 10, **characterised in that** the absence of the user's use of a control of said power hoe causes said power hoe to be switched off after a predetermined time.

12. Power hoe according to any of Claims 1 to 11, **characterised in that** the axis of said electric motor (15) is arranged on said equipment at an angle of inclination with respect to the vertical, towards the front or rear of said power hoe.

13. Power hoe according to any of Claims 1 to 12, **characterised in that** it comprises at least one detachable transport wheel (41, 42) which can be secured to at least one of said tillage implements (14, 43, 44) so as to assist movement of said power hoe.
